# EUROPEAN PATENT SPECIFICATION

(11) **EP 0 529 103 B1**
(45) Date of publication and mention of the grant of the patent: **05.08.1998**
(21) Application number: 90400561.8
(22) Date of filing: 28.02.1990
(51) Int. Cl.: H04N 11/08, H04N 9/64, H04N 7/167

(54) **Video signal processing device and method**
Verfahren und Vorrichtung zur Verarbeitung eines Videosignals
Circuit et méthode de traitement de signal vidéo

(43) Date of publication of application: 03.03.1993
(73) Proprietor: TEXAS INSTRUMENTS FRANCE, 06270 Villeneuve Loubet (FR); TEXAS INSTRUMENTS INCORPORATED, Dallas Texas 75265 (US)
(72) Inventor: Chauvel, Gérard, 06600 Antibes (FR); Childers, Jimmie D., Missouri City, Texas 77489 (US)
(74) Representative: Obolensky, Michel

(56) References cited:
- EP-A- 148 618
- EP-A- 209 406
- EP-A- 317 218
- EP-A- 349 300
- WO-A-84/04013
- ELEKTRONIK, vol. 38, no. 18, 1st September 1989, pages 44-46,48-50, Munchen, DE; H. ZIBOLD et al.: "MAC und das digitale Fernsehen"
- TOUTE L'ELECTRONIQUE, no. 534, May 1988, pages 24-29, Paris FR; R. BESSON: "Circuit intégré"

## Description

### TECHNICAL FIELD OF THE INVENTION

This invention generally relates to television systems, and more particularly to a digital television processor unit for processing a multiplexed analog component television signal.

### BACKGROUND OF THE INVENTION

Component television transmission is a baseband means for separating video signals to avoid the various artifacts of composite video. As indicated by its name, a component transmission uses component video signals, i.e., the red, green, and blue output signals of the camera are converted by a linear matrix into a luminance signal and a chrominance signal. For transmission, these components are temporally separate and transmitted in series, together with a component containing timing and audio information.

A popular form of component transmission is multiplexed analog component (MAC) transmission. There are several versions of MAC, such as the C-MAC/packet system adopted by the European Broadcasting Union, the D2-MAC/packet system adopted by France and Germany, and the D-MAC/packet system adopted by Britain. The video is the same in all systems, but the modulation method and the number of channels for digital audio vary.

The MAC signal is designed to be easily stepped up for high definition television (HDTV). Because the studio bandwidth is too wide for transmission, MAC systems reduce the bandwidth with signal-processing methods, using linear frequency domain techniques. These include filtering to reduce signal bandwidth and sampling to produce a signal suitable for transmission on a MAC channel. In a typical MAC transmission, the chrominance signal is time-compressed in a ratio of 3:1, with the chrominance signal being one of two color difference signals, CR or CB. The luminance signal, Y, is time-compressed in a ratio of 3:2.

Because of the signal compression, at the receiving end of the television system, the signals must be time-expanded to their original data rate. A need exists for an efficient receiving unit, easily incorporated into a television receiving system, for expanding component signals so that a high quality picture may be produced for display.

In addition to being time-compressed, many component television signals, such as MAC, are also scrambled so that only authorized viewers have access to the signal. When the television transmission signal is a component signal, a commonly used scrambling scheme is interchanging the positions of the components. Cut-points of a component, at which the component is split into at least two parts, are generated by a scrambler. These parts and interchanged with each other to form a scrambled signal. A need exists a for a television receiving system that descrambles component signals, without creating processing bottlenecks or delays.

### SUMMARY OF THE INVENTION

An apparatus described herein is an improved descrambling unit for descrambling a digital television signal having raster scan lines of plural bits of digital data in at least a luminance component and a chrominance component, said digital television signal scrambled by interchanging parts of at least one of the luminance component and the chrominance component of each raster scan line of the digital television signal, said parts being interchanged at a corresponding cut-point, characterized in that it comprises :
a data input register having a matrix of memory cells disposed in plural rows and plural columns, said plural columns equal in number to the number of pixels in a raster scan line, said data input register having an input port for receiving a number of bits equal to said plurality of rows for simultaneously storing a plurality of received bits in a selected column, said data input register having an output port for recalling from a selected row data stored in each of said columns;
an input control unit receiving information regarding said cut-point and connected to said data input register, said input control unit for a first received pixel selecting a column of said data input register corresponding to said cut-point, for subsequently received pixels selecting sequential columns of said data input register until a last column is selected, for a next received pixel selecting a first column of said data input register, and for subsequently received pixels selecting sequential columns until a last pixel of the raster scanned line is received;
a single-instruction multiple-data processor having a number of processing elements equal to a number of pixels in each raster scan line of the digital television signal;
a first data transfer control unit connected to said data input register and said single-instruction multiple-data processor, said output control unit selecting said row accessed by said output port of said data input register for transfer of data stored in each column of said selected row to a corresponding one of said processing elements;
a data output register having a matrix of memory cells disposed in plural rows and plural columns, said plural columns equal in number to the number of pixels in a raster scan Line, said data input register having an input port for receiving and storing in a selected row data in each of said columns, said data output register having an output port for simultaneously outputting a number of bits equal to said plurality of rows from a selected column; and
a second data transfer control unit connected to said single-instruction multiple-data processor and said data input register, said second data transfer control unit selecting said row accessed by said input port of said data output register for transfer of data from a corresponding one of said processing elements to in each column of said selected row.

A technical advantage of the invention is that the same set of data input registers may be used for descrambling the circuit as for providing input to a processor. An input control circuit interchanges the scrambled portions of the signals as they are loaded to the processor. The descrambling is done externally so that the processor may be kept general, yet there is no need to load the signal to a separate memory, descramble, and reload to the processor.

### BRIEF DESCRIPTION OF THE DRAWINGS

Figure 1 is a block diagram of a representative single-instruction multiple-data processor.

Figure 2 is a block diagram of a processing element of the processor of Figure 1.

Figure 3 is a timing diagram of the processor of Figure 1.

Figure 4 illustrates near-neighbor communications among processing elements of the processor of Figure 1.

Figure 5A is a block diagram of a digital processing unit that includes the processor of Figure 1.

Figure 5B is a block diagram of a typical television receiving system that includes the digital processing unit of Figure 5A.

Figures 6A and 6B illustrate two component scrambling schemes, a single cut rotation scheme and a double cut rotation scheme, respectively.

Figure 7 illustrates the cut-point positions of a chrominance and a luminance signal.

Figure 8 illustrates a descrambler unit for a double cut rotation scrambling scheme.

Figure 9 illustrates the descrambling control circuit of Figure 8 in further detail.

Figure 10 illustrates the steps of a method of descrambling a component television signal for input to a single-instruction multiple-data processor.

Figure 11 illustrates the relationship of control and timing signals during the method of Figure 10.

Figure 12 illustrates the steps of a method of using a single-instruction multiple-data processor for processing component signals.

### DETAILED DESCRIPTION OF THE PREFERRED EMBODIMENTS

### Related Applications

This application is related to United States patent applications Serial No. 119,890 (TI-13116), filed November 13, 1987; Serial No. 435,862 (TI-13116A); Serial No. 119,889 (TI-13117); Serial No. 256,150 (TI-13117A), filed November 13, 1987; Serial No. 323,045 (TI-13117B), and Serial No. 402,975 (TI-13117C). These applications have a corresponding European Patent Application No. EP-A-0 317 218, filed November 11, 1988, and published 24 May 1989.

### Serial Video Processor

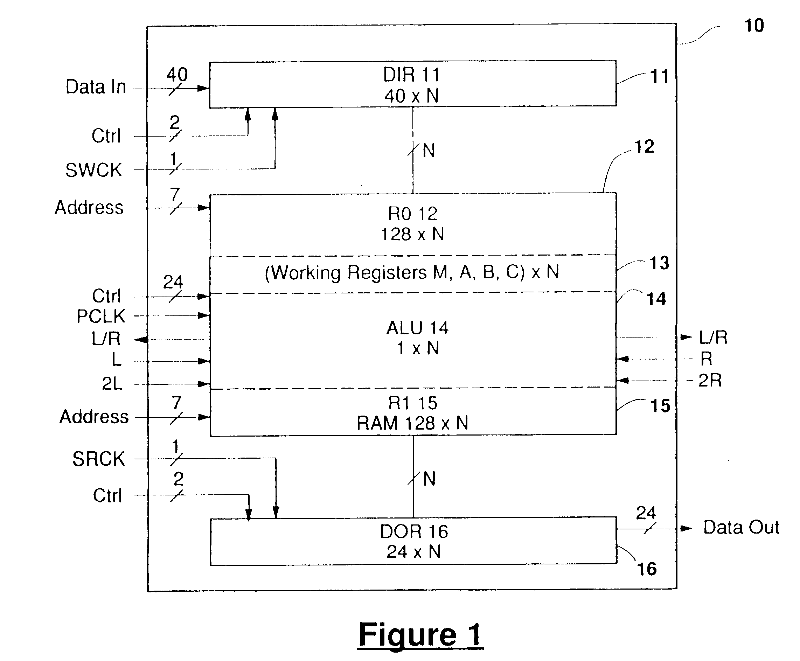

Figure 1 illustrates an example of a serial video processor (SVP) 10, which may also be described as a synchronous vector processor (also SVP). The SVP 10 of Figure 1 is the subject of the copending patent applications cited above. Subsequent sections of this application are directed to devices and processes that use SVP 10. However, these devices and processes are not necessarily limited to use with this particular SVP 10, and variations of SVP 10 may be used.

The "serial video" aspects of SVP 10 derive from the fact that it is particularly suited for video processing, where discrete packets of incoming data, which have a uniform size, are input and output in a word-serial manner but are processed in parallel. The "synchronous vector" aspects of SVP 10 derive from the fact that it receives and processes data vectors in synchronization with a real time data source. Essentially, SVP 10 operates by using fine-grained parallelism techniques in which many processing elements operate on the data concurrently.

SVP 10 is a general purpose, mask-programmable, single instruction multiple data (SIMD), reduced instruction set computing (RISC) device. Consistent with the SIMD characteristic, SVP 10 has a number of processing elements (PE's), which execute the same instruction at the same time. External microinstructions control primitive logic and arithmetic functions for each clock cycle.

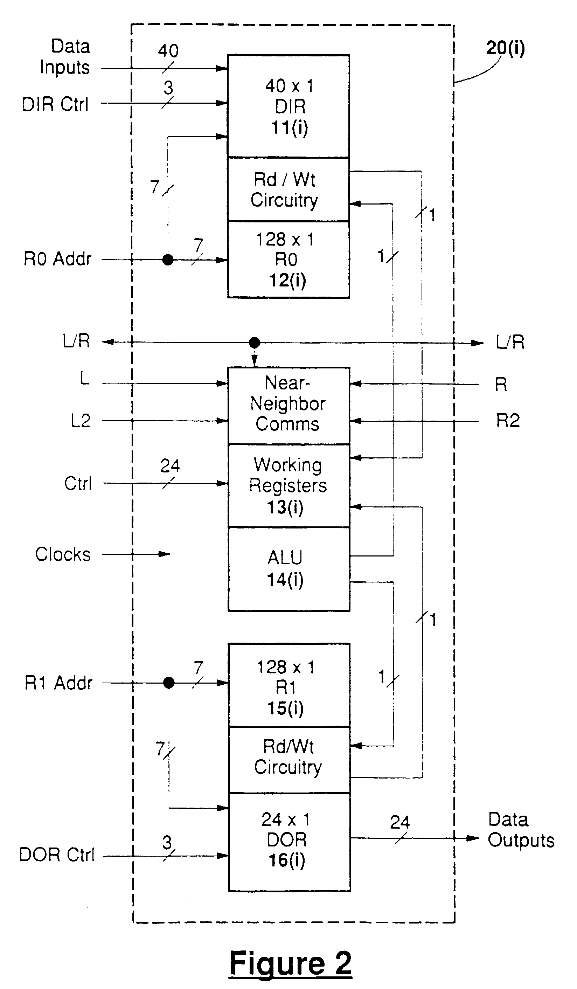

Referring to Figures 1 and 2, SVP 10 is a one-dimensional array of one-bit PE's 20. Each PE 20 has the following basic components: a data input register (DIR) 11, two independently addressed register files (R0 and R1) 12 and 15, a set of working registers (WR's) 13, a one bit arithmetic unit (ALU) 14, and a data output register (DOR) 16. These are described briefly in this section, and reference to the related patents cited above will provide further description, especially with regard to instructions and timing.

DIR 11 can be thought of as the "input layer". RO 12 and R1 15, the WR's 13, and the ALU 14 are the "computational layer". DOR 16 is the "output layer". Although each layer may be independently clocked across each layer, all PE's 20 operate in unison, every clock cycle. The input to DIR 11 is word-serial in the sense that words of an incoming packet of data are received into DIR 11 word by word. Similarly, the output from DIR 16 is word-serial.

Although input and output are word-serial, processing of each data packet is parallel. Also, because of the "layered" approach to processing, data input, computation, and data output may be concurrent operations, with each being independently clocked. Each PE 20 performs these operations on an entire vector of data at once, and is thus a "pipeline" that enables several operations to be in various stages at once. When a vector instruction is executed, the elements of the vector are fed into the appropriate pipeline one at a time, delayed by the time it takes to complete one stage of the pipeline. Input and output are in synchronization with the data source, such as a video camera, and with the data sink, such as a raster scan display.

For purposes of illustration, SVP 10 has N number of PE's 20, where N = 698. The memory size is 256 bits for each PE 20, with 128 bits each for R0 and R1, DIR 11 is 40 bits wide and DOR 16 is 24 bits wide. These sizes are discretionary, however, and may be changed without changing the substance of the invention. The input and output bit sizes are included in Figures 1 and 2 to illustrate various input/output and device size relationships. However, these bit sizes may be varied according to the application.

Using these values, a single SVP 10 can process data packets of 1 to 698 words by 40 bits. Typically, the packets are equal in size and represent periodically recurring data, such as lines of a television image, where each packet is digitized into N number of data samples, and where each sample, S(i), i = 1...N, is a data word used to generate an output word. In television applications, where SVP 10 has N PE's 20, N also represents the number of data samples per line.

Figure 2 illustrates a single PE 20(i) and its associated components, where i = 1...698. A vertical slice through SVP 10 of Figure 1 yields an individual PE 20 of Figure 2, thus each PE 20(i) and its components are referred to herein as a "column" with respect to the entire array of SVP 10.

DIR 11 and DOR 16 are the basic I/O devices of SVP 10. Both DIR 11 and DOR 16 are arrays of sequentially addressed, dual-ported memory cells. As used in this description, "DIR 11" refers to the entire array, and "DIR 11(i)" refers to the column of DIR 11 that receives data sample S(i). A special dual configuration of DIR 11 is described in a subsequent section of this application, but the following general description is applicable.

Referring to both Figures 1 and 2, the input array size to SVP 10 permitted by DIR 11 is 698 words x 40 bits. One port of DIR 11 is organized as 698 words of 40 bits each and permits DIR 11 to be written into from a 40 bit input line in parallel. Thus, this first port of DIR 11 emulates the write port of a 698-word line memory, which permits word-serial input. The second port of DIR 11 is organized as 40 words of 698 bits each, where each bit corresponds to a PE 20(i). This second port provides an interface between DIR 11 and PE's 20. It is physically a part of, and is mapped into, the absolute address space of R0 12. This permits the contents of DIR 11 to be addressed for selection to write into memory and is read in parallel.

Like DIR 11, DOR 16 is a two port device. In a manner similar to DIR 11, it provides 1-bit access to each ALU 14(i) and 24-bit output from SVP 10. One port of DOR 16 is organized as 698 words of 24 bits each. This port functionally emulates the read port of a 698-word line memory and is used for word-serial output. The second port of DOR 16 is organized as 24 words of 698 bits each, where each bit corresponds to a PE(i). This second port couples to R1 15, and is written to in parallel.

The write and read control signals to DIR 11 and from DOR 16 are explained in detail in subsequent sections of this application, but in general, DIR 11 and DOR 16 each have a 698-bit word selection commutator, which controls loading to and reading from DIR 11 and DOR 16, respectively. Also, DIR 11 and DOR 16 each have an enable and a reset signal.

The data inputs to DIR 11 are controlled by the signals Write Enable (WE), Reset Write (RSTW), and Serial Write Clock (SWCK). WE controls both the write function and the address pointer increment function synchronously with SWCK, which is the data sample clock input. When high, RSTW resets the address pointer to the first word in DIR 11 on the next rising edge of SWCK. The control signals for DOR 16 are Read Enable (RE), Reset Read (RSTR), and Serial Read Clock (SRCK), which operate in an analogous manner.

R0 12 and R1 15 each have 128 words by 1 bit of read/write memory per PE 20. Different addressing structures cover the RO 12 and R1 15. However, R0 12 and R1 15 share the same control and timing circuitry. R0 12 and R1 15 are comprised of random access memory (RAM) cells. If dynamic RAM cells are used, they must be refreshed, but typical digital television applications perform the refresh by operating in a faster cycle time than the required refresh period.

Each R0 12(i) and R1 15(i) is independently addressable, and is capable of 1-bit read-modify-write cycle such that it can be read, the data operated on by ALU 14, and the result written back to it in a single clock cycle. R0 12 and R1 15 read data at the same time, but write separately.

The working register (WR) set 13(i) for each PE 20(i) comprises four registers: M, A, B, and C. These registers are the same, except for their data sources and destinations. Each WR 13(i) is associated with an input multiplexer for providing data to the four inputs of each ALU 14(i). The M register is used for division, multiplication, and logical and conditional operations. Registers A, B, and C are addend, minuend, and carry/borrow registers, respectively.

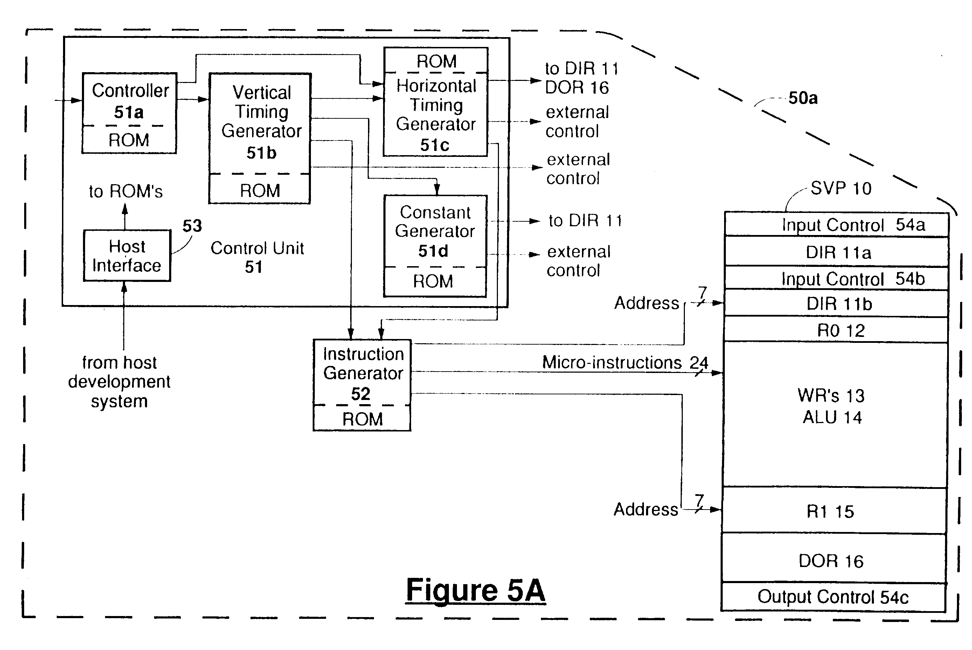

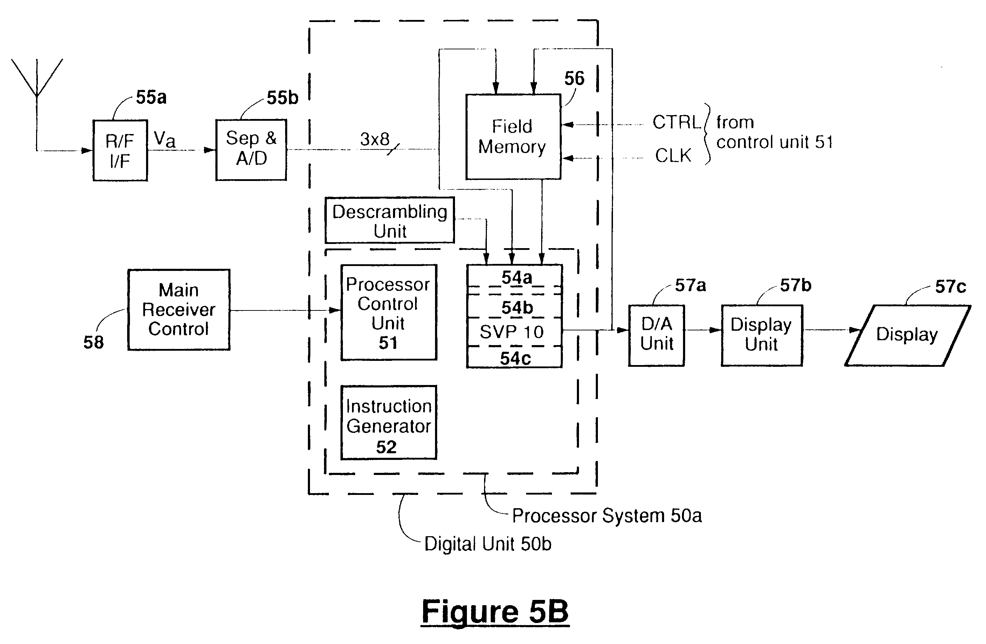

ALU 14 is a simple full adder/subtracter and a one-bit multiplier. The inputs to ALU 14 are from the WR's 13. These ALUs carry out whatever instruction is specified by the control unit of SVP 10. A feature of SVP 10 is that each ALU 14 executes instructions from a set of instructions that operate on data directly. A control unit, which feeds an instruction stream to SVP 10 has an additional set of instructions that provide basic execution control. The control unit is further described below in connection with Figure 5.

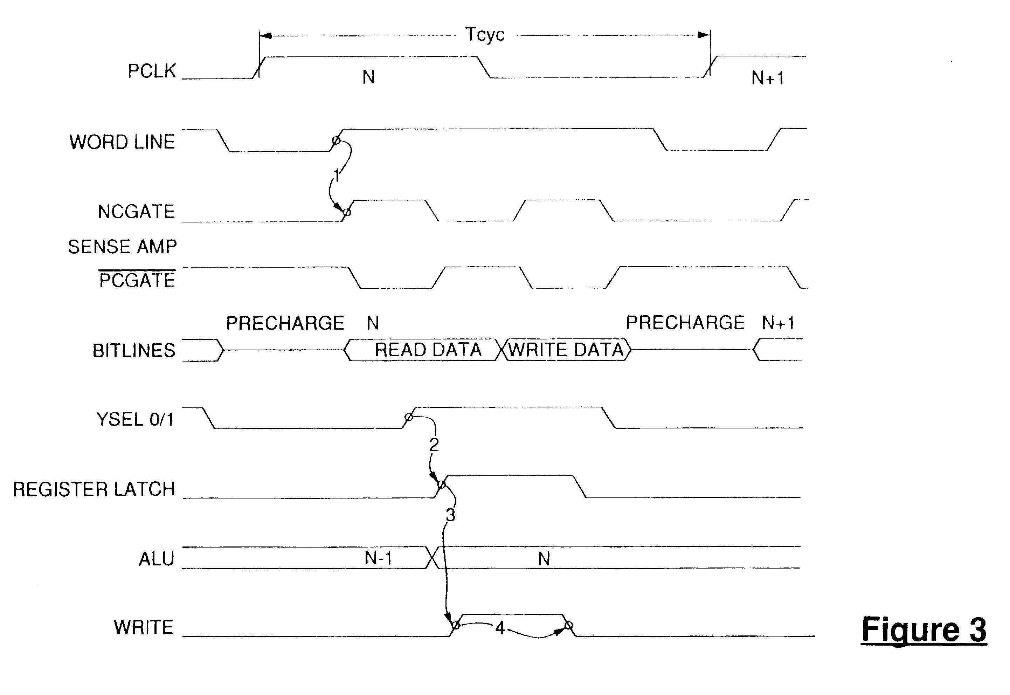

Figure 3 is a timing diagram of a single cycle of SVP 10. A processing clock (PCLK) is one of three clocks of SVP 10, where each clock corresponds to an input, computational, or output layer. Although the clocks are asynchronous to permit concurrent operations of these three layers, the input and output clocks stop to permit data transfers into and out of the computational layer.

In Figure 3, one PCLK cycle, N, has a period T. The labeled timing points indicate interlocked edges, where NCGATE and PCGATE are control signals for sense amplifiers (not shown) and YSEL 0/1 indicates a select signal for RO 12 or R1 15. The sense amplifiers amplify and control the BITLINES for R0 12 and R1 transfers. To achieve single-cycle, 698-bit, parallel computations, data transfers between RO 12, R1 15, and ALU 14 are precisely timed. Each such data transfer is held off by a computation interlock circuit until the end of computation is indicated. This technique achieves a fast memory/processor data transfer rate.

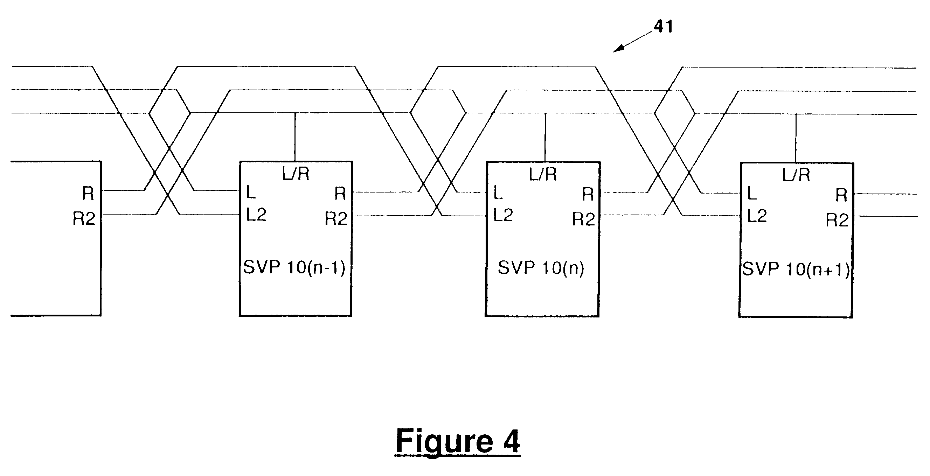

Figure 4 illustrates the near neighbor communications among PE's 20. A left/right (L/R) bus 41 provides direct memory and register read/write from each PE 20 to its four nearest neighbor PE's 20, i.e., the two PE's 20 to the left and the two PE's 20 to the right. To accomplish such communication, each PE 20 generates one output, which is fanned out to its four neighbor PE's 20. This output may be from any one of four sources: a logical 0, the contents of the B register of WR 13, or a location from either RO 12 or R1 15. Each PE 20 also receives four signals, one from each of its four nearest neighbors.

### SVP Video Applications

As indicated above, SVP 10 is especially useful for digital video processing. Each signal segment that represents a horizontal line of an incoming television signal is digitized as a data "packet" comprised of a data samples. SVP 10 loads, processes, and outputs data for each pixel on a horizontal line in parallel. The architecture of SVP 10 permits data vectors from multiple pixels, multiple lines, or multiple fields to be processed in parallel, and hence SVP 10 is capable of the "three dimensional processing" required for digital television.

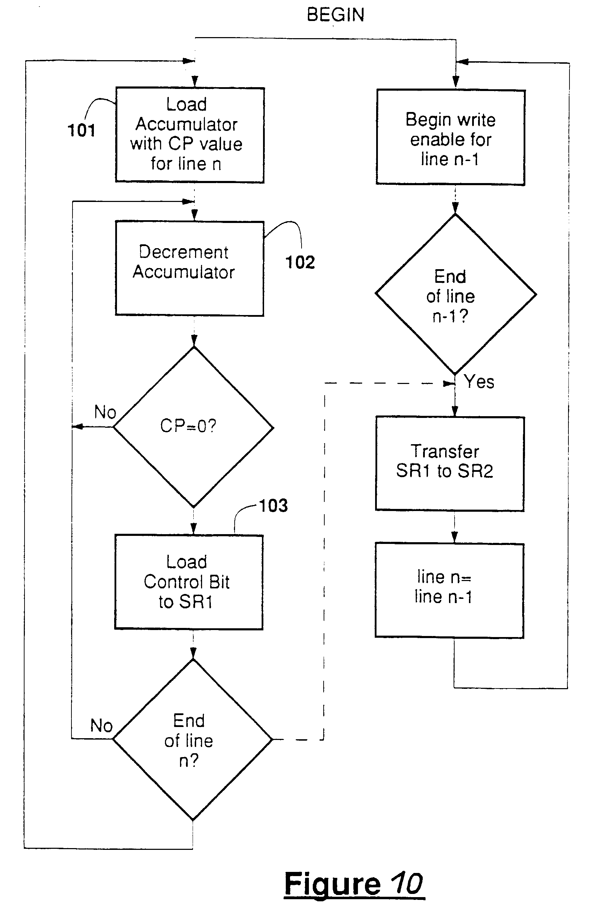

A particular advantage of using SVP's 10 is that discrete line memories are not required. Line-by-line storage is emulated in the processing of SVP 10, using a software procedure, referred to as "global rotation". This procedure is explained in the above-cited U.S. patent application, Serial No. 421,499 and in connection with Figure 10 below.

Figure 5A illustrates a basic processor system 50a having a single SVP 10. The television receiver circuitry surrounding processor system 50a is described in connection with Figure 5B, which also illustrates data inputs to SVP 10. In contrast, Figure 5A illustrates the control, address, and instruction inputs to SVP 10, and may be supplemented with the description of the same circuits in the above-cited U.S. patent application, Serial No. 421,499.

Referring now to Figure 5A, the basic components of processor system 50a are SVP 10, an SVP control unit 51, and an instruction generator 52. The use of one SVP 10 versus more than one SVP 10 is dependent on the complexity of the processing tasks and hence on the execution time. For full-screen real-time video processing, the operations performed on a line of picture data must be executed in a single 1H period, where H represents the period of one horizontal scan line. However, if 1H is not enough time, more than one SVP 10 may be interconnected and processing tasks partitioned among them.

Each SVP 10 need not have the exact configuration of Figures 1 and 2. As already stated, the distinguishing characteristics of an SVP 10 is the ability to process a data packet representing a data packet consisting of an entire line of a television picture in parallel, using a processing element for each pixel.

As shown in Figure 5A, for component television processing, DIR 11 is divided into a chrominance DIR 11a and a luminance DIR 11b. Each DIR 11a and 11b is 20 bits wide rather than 40 bits wide as in Figures 1 and 2. DIR 11a has 698 positions for 349 data samples from odd and even lines. DIR 11b has 698 positions, but only 697 are used. The second port of each DIR 11a and 11b, i.e., the port that interfaces with RO 12 and R1 15, is 20 x 698.

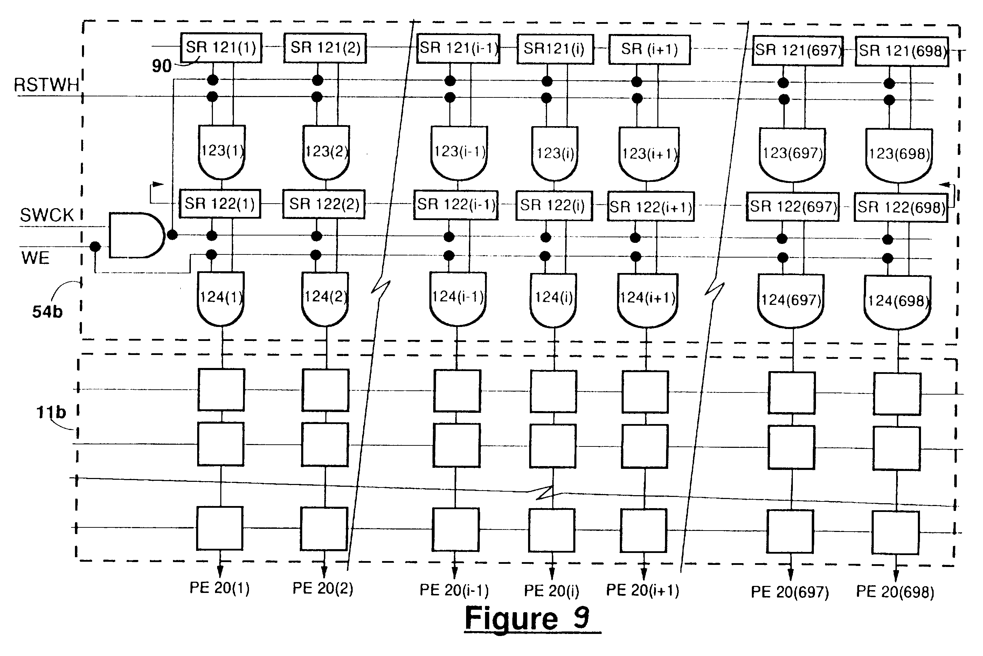

Input control units 54a and 54b for each DIR 11a and 11b, may perform more than one type of input control, depending on the particular application. For loading DIR 11, control circuits 54a and 54b includes a means for controlling the WE signal, which is triggered to begin at the end of a horizontal blanking period and clocked so that all columns of DIR 11 are loaded during one horizontal scan period. Input control units 54a and 54b also control what type of data is received into SVP 10. Two types of input control circuit, especially designed for component signal expansion and descrambling, are described in subsequent sections of this patent application in connection with Figure 9. An output control unit 54c may be configured using similar techniques.

SVP control unit 51 has several components: controller 51a, vertical timing generator 51b, horizontal timing generator 51c, and constant generator 51d. Ideally, each of these devices is programmable and accesses its own program store memory. In Figure 5A, each of these components has its own read only memory (ROM). To facilitate development of processing tasks, programs may be developed on a host system (not shown) and downloaded to each ROM, using standard interface techniques. A host interface 53 may be for either parallel or serial data transfers, for example an RS-232C interface.

In operation, SVP control unit 51 generates control signals for SVP 10, which are synchronized with the vertical synchronization signal and the horizontal synchronization signal of the incoming television transmission. These control signals include operating constants, instructions, and timing signals. As an overview of the timing operation of SVP control unit 51, controller 51a controls the video signal processing at a field or frame rate, vertical timing generator 51b controls processing at a line rate, and horizontal timing generator 51c controls processing at a pixel rate.

SVP control unit 51 also provides timing and control signals to other system components, such as for horizontal and vertical synchronization. These latter timing signals are "external" in the sense that they do not control processor system 50a. Instead they control devices such as field memories, as described in subsequent sections of this application.

Controller 51a receives and interprets external commands from a main television control unit (shown in Figure 5B). It generates a series of control codes to vertical timing generator 51b and horizontal timing generator 51c. Controller 51a is programmable with a variety of instructions, including conditional and vectored jumps.

Vertical timing generator 51b provides control codes to horizontal timing generator 51c, constant generator 51d, and instruction generator 52. It provides timing to external circuits requiring a timing resolution of one horizontal line.

Horizontal timing generator 51c generates timing signals for circuits requiring timing edges at sample clock rates, such as DIR 11, DOR 16, field memories, and A/D and D/A converters (shown in Figure 5B). It is capable of producing timing edges with a resolution as small as one sample clock.

Similarly, constant generator 51d provides constant values to individual PE's 20. There are two main reasons for using such constants. First, it is possible to map waveforms onto the PE's 20. Second, local constants distinguish the I chrominance signal from the Q signal, and permit the PE's 20 to multiplex and demultiplex the chrominance signal and to modify algorithms in the horizontal direction when merging two images.

Instruction generator 52 receives algorithm specifier codes from vertical timing generator 51b and condition flags from horizontal timing generator 51c. It outputs a 23-bit micro-instruction to ALU 14, and two 7-bit addresses for RO 12 and R1 15. Also, instruction generator 52 provides basic execution control instructions, such as for jumps, calls and returns, test flags, and global rotation. Instruction generator 52 is associated with program storage, such as a ROM, to which instructions may be downloaded from a host system (not shown).

The various digital television processing tasks performed by processor system 50a may include scan conversion, motion detection, luminance and chrominance signal processing, and interpolation and decimation. Many of these tasks involve the use of filter algorithms to remove unwanted signal artifacts. Special configurations and programming for scan conversion and filtering are explained in subsequent sections of this application.

Figure 5B is a block diagram of the basic components of a television receiving system, which includes processor system 50a. More specifically, processor system 50a is part of a digital unit 50b, which also includes field memory 56. The receiving system of Figure 5B may be any one of a number of standard receiving systems for component television signals.

At the front end of the system, a video signal from an antenna or other source is detected in the usual manner through standard RF/IF unit 55a, producing an analog video signal Va. Separation and analog to digital (A/D) unit 55b performs whatever demodulation or separation is required for the particular signal being used and converts the signal to digital sample data. This data, in digital form, as referred to herein as the "signal" due to the fact that it represents a continuous incoming picture signal. Although word sizes and sampling rates may vary, for purposes of example herein, typical sampling characteristics might be conversion of the analog signal into 8-bit samples at a sampling frequency of 20.25 MHz.

For every pixel to be displayed, this conversion produces three parallel inputs to DIR 11 of SVP 10, i.e., a luminance sample and two chrominance samples. With a 40 bit DIR 11, each pixel value may be represented by a total of 40 bits. Typically, each sample is an 8-bit word, thus each pixel is derived from at least three 8-bit words.

Digital unit 50b has a processor system 50a and field memory 56. Field memory 56 is simply a standard first in, first out memory for storing fields of video data. Field memory 56 is actually comprised of a number of field memories 56(i), which provide digital unit 50b with the field-delayed data used for various processing tasks, especially temporal filtering. Each of these field memories 56(i) may be any one of a number of well known storage devices, such as the TMS4C1060, manufactured by Texas Instruments, Inc. Field memory 56 may be a bank of DRAM's, or because random access is not necessary, may merely provide serial input and output. Depending on the algorithms performed by ALU 14, field memory 56 may be part of a feedback path to SVP 10, or it may simply provide pre-processing or post-processing storage.

A main receiver control unit 58 receives external signals, such as those from a key pad, remote control, or video decoder. It decodes these signals and transmits them to other receiver components, such as SVP control unit 51.

From digital unit 50b, the processed video data signal is output in parallel, as three 8-bit words to D/A unit 57a. The resulting signal from D/A unit 57a is the same analog signal that would be received by display unit 57b if processor system 50 were not included. Thus, digital unit 50b is simply interposed in the signal path at the output of a convention television receiver RF/IF unit 55a.

Display unit 57b is a standard unit for converting the processed signals into red, green, and blue signals. This is accomplished by the usual matrix techniques.

Display 57c receives the analog video signal from display unit 57. Typically, display 57c is of a raster scan type, such as a cathode ray tube. However, the invention could be used with any type of display having appropriate adapter circuits to use the signal generated by SVP 10. For example, display 57c could be used with a display memory (not shown) that receives the signal from processor system 50a and outputs all pixel elements in parallel.

### Component Signal Descrambling

Many transmission systems, notably pay television broadcast systems, scramble the transmitted video signal so that only authorized viewers have access to the signal. One form of scrambling is interchanging the position of segments of the color difference and the luminance signals.

Referring again to Figure 5B, the television receiver may be used with a descrambling unit 60, which unscrambles the incoming signal before processing. The object is to read each data sample once during the period devoted to transmitting a line, and obtain a correct correspondence between transmitter and receiver sample locations. After the data is processed, it may be read out in raster format to produce a normal display on the picture tube.

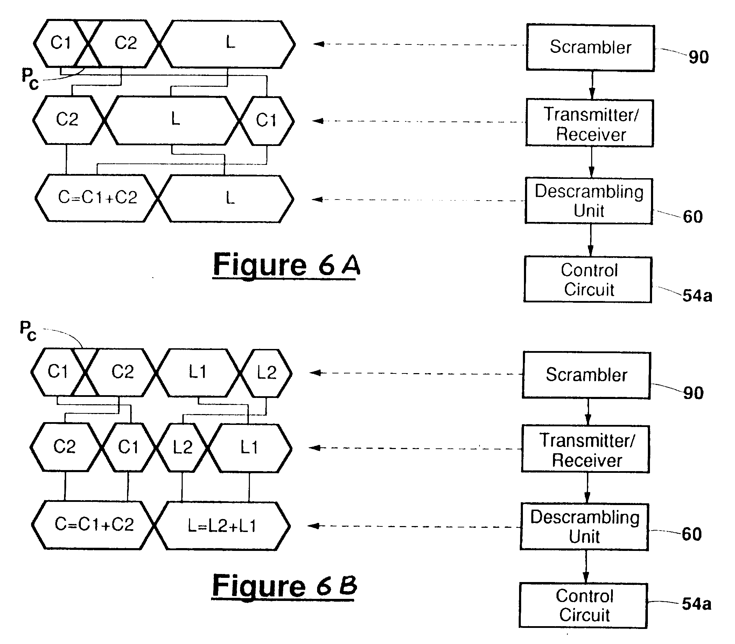

Figures 6A and 6B provide an overview of a descrambling process. They illustrate two component scrambling schemes: a single cut rotation scheme and a double cut rotation scheme, respectively. Both schemes use at least one cut-point, Pc or Pl, which divides the signal into segments, and hence provides exchange positions for scrambling the signal.

As shown in Figure 6A in the case of single cut-point rotation, a scrambler 90 generates a cut-point Pc, which represents a cut-point for the color signal. The cut-point defines three fields, C1, C2, and L. A descrambler unit 60 in the television receiver calculates the position of the cut-point and interchanges C1 and C2.

Similarly, as shown in Figure 6B in the case of double cut component rotation, a scrambler (not shown) generates two cut positions, Pc and Pl, which represent color and luminance cut positions, respectively. These cut-points define four fields, C1 and C2 and L1 and L2, of the transmitted and received signal. A descrambler unit 60 tracks the positions of the cut-points Pc and Pl with respect to the incoming line, and interchanges C1 and C2 and L1 and L2.

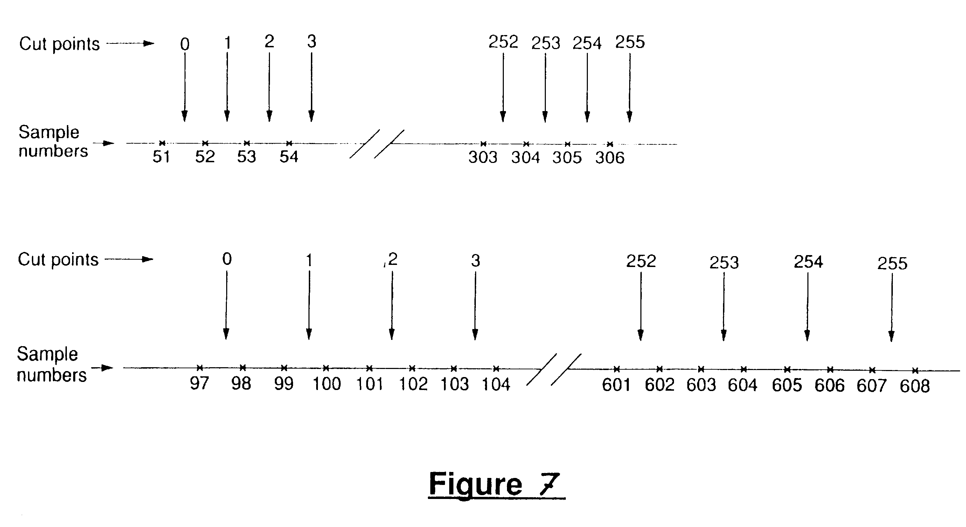

Figure 7 illustrates permissible cut-points for a chrominance signal, i.e, the Pc values. They begin between sample number 51 and sample number 52 and may exist between any two consecutive samples up to sample number 307. The permissible cut-points for the luminance signal, i.e., the Pl values, begin between sample number 97 and 98 and may exist between every other succeeding pair of samples up to sample number 608. Thus, there are 255 possible cut-points for a chrominance signal and 255 possible cut-points for a luminance signal. The first permissible sample number for a cut-point of either signal, i.e., 51 or 97, is referred to herein as a "cut-point beginning sample number". The number of samples past the cut-point beginning sample number is referred to herein as the "cut-point differential value".

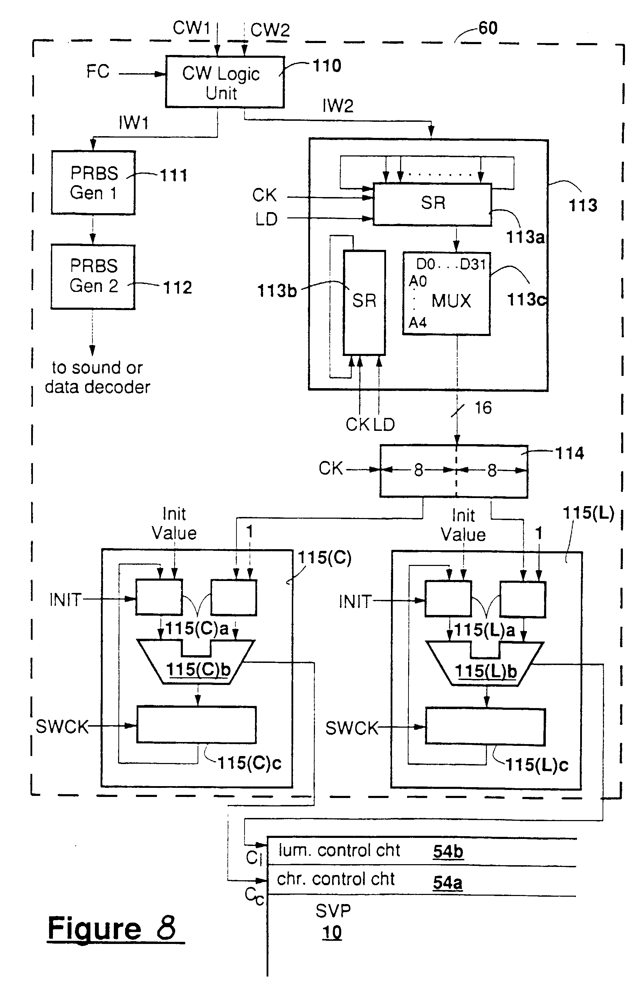

Figure 8 illustrates a descrambler unit 60 for a double cut rotation scrambling scheme. Descrambler unit 60 comprises several basic components: a control word logic unit 110, three pseudo-random binary sequence (PRBS) generators 111-113, a cut-point value register 114, a color cut-point generator 114, a luminance cut-point generator 115, and SVP 10. A luminance control circuit 54a'' and a chrominance control circuit control 54b'' control the data input.

Control word logic unit 110 nas three inputs: two control words, CW1 and CW2, and a frame counter word FC. The control words are generated from data transmitted at the beginning of each horizontal line and a local key. Control word logic unit 110 generates two initialization words, IW1 and IW2. IW2 is the result of XOR logic between signals CW1 or CW2 and FC.

IW1 is delivered to the first and second PRBS generators 111 and 112, which generate a descrambled signal that is delivered to a sound or data decoder. This signal is not especially relevant to video signal processing described herein.

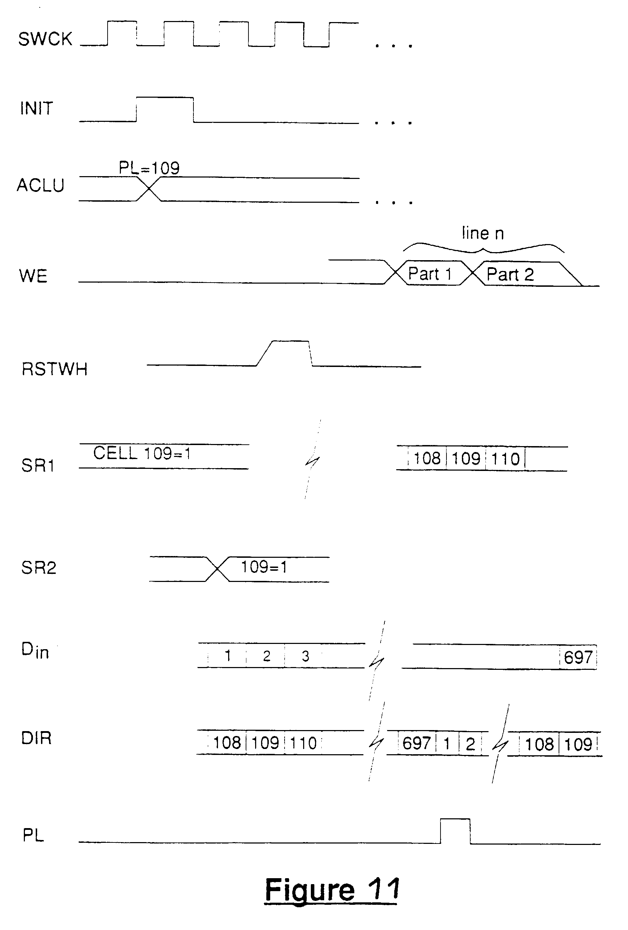

IW2 is delivered to picture PRBS generator 113. The other inputs to picture PRBS generator 113 are a load pulse, LD, and a clock signal, CK. The LD pulse is at the frame rate, and the CK signal is 16 times the line frequency. The output of picture PRBS generator 113 is two line cut data words delivered to SRO 114, shown in Figure 11 as two 8-bit words.

Within PRBS generator 113, IW2 initializes a 60 stage linear feedback shift register 113 at the beginning of each frame. Like standard shift registers with feedback, the feedback makes shift register 113 go through a counting cycle in a pseudo random sequence. In Figure 11, shift register 113 is divided into a 29-stage shift register 113a and a 30-stage shift register 113b. The output is a 5-bit address output from shift register 113a and a 31-bit data output from shift register 113b.

The outputs of shift registers 113a and 113b are delivered to multiplexer 113c. Depending on the value of the address word, one of the data values from shift register 113a is the output of multiplexer 113c. Because of the frequency of CK, for every line, multiplexer 113c outputs a 16-bit serial output. Of these 16 bits, 8 bits represent 255 cut-point positions in the chrominance part of the video signal and 8 bits represent 255 cut-point positions in the luminance part of the video signal.

The output of multiplexer 113c is delivered to cut-point value register 114. The first 8-bit output is used for both double cut component rotation scrambling and for single-cut scrambling. The second 8-bit output is used only in the case of double-cut scrambling.

The two 8-bit outputs of cut-point value register 114 are connected to cut-point generators 115(C) and 115(L), which generate cut-points for the chrominance and luminance signals respectively. Each has a pair of multiplexers 115a, an arithmetic unit 115b, and an accumulator 115c. In addition to the data from cut-point value register 114, additional inputs to each cut-point generator 115 are an INIT signal to one of each pair of multiplexers 115a, and a SWCK signal to the accumulator 115c. The INIT signal signifies the beginning of each new line of video data in the television signal. The SWCK signal, as explained above, is a serial write clock. The INIT VALUE input is 51 for chrominance and 97 for luminance. Thus, for example, at the beginning of a new line, if PRBS generator 113 generates a chrominance cut-point of 195, accumulator 115c(C) is loaded with 195+51=246. The "1" input is used to decrement accumulator 115c.

As explained below in connection with Figures 9-11, each arithmetic unit 115b adds the appropriate cut-point beginning sample number, i.e., 97 or 51, to the cut-point differential value. This sum is the cut-point position, Pc or Pl. Each accumulator 115c receives the cut-point value, which it decrements to 0. The output of each cut-point generator 115(C) or 115(L) is a chrominance cut-point control bit, Cc, or a luminance cut-point control bit, Cl, respectively. A descrambling input cut-point control circuit 54a'' or 54b" receives the cut-point control bit, which it uses to control the loading of its DIR 11a or DIR 11b for chrominance and luminance data respectively.

Figure 9 illustrates luminance descrambler input control circuit 54b'' in further detail, as well as luminance DIR 11b(i), i= 1...698, where each DIR 11b(i) is associated with a PE 20(i) of SVP 10. The structure of the chrominance input control circuit 54a'' is the same.

Descrambler control circuit 54b'' has two stages of shift registers: a serial input stage and a parallel input stage. The individual registers of these stages are referred to as SR 121(i) and SR 122(i), respectively. The registers of both stages are activated when both WE and SWCK are on. The output of each stage is delivered to AND logic gates 123(i) and 124(i), where the output is AND'd with another external signal, as explained below in connection with Figures 13 and 14.

The serial input shift registers 121(i) receive and shift the control bit from luminance cut-point generator 115(L). These are right to left shifting registers, so that, as explained below the control bit can be positioned in the shift register 121(i) that corresponds to the DIR llb(i) that is to receive the first sample after the cut-point. The output of each serial input shift register 121(i) is AND'd with WE to produce the input to the parallel input shift register stage 122.

The parallel input shift registers 122(i) form a continuous loop, as indicated by the arrows in Figure 9. Thus, the contents of SR 122(698) shift to SR 122(1). The output of each SR 122(i) is AND'd with WE to cause the parallel loading of luminance DIR 11b.

Figures 10 and 11 illustrate in further detail, a method of using SVP 10 to descramble a television signal. Figure 10 is a flowchart of the steps of the method, and is best understood with reference to the timing diagram of Figure 11. As indicated, the serial loading of SR's 121(i) to the proper position for the current line occurs at the same time as loading DIR 11a with the sample values for the previous line.

For purposes of example, the following explanation of Figures 10 and 11 tracks the method with respect to generating luminance data for one line. A cut-point differential value of 06 is used, so that Pl = 97 + (2)6 = 109. However, the Pl value could be any number between 97 and 255.

The WE signal of Figure 11 represents the signal that enables a data window to be written to DIR 11b. This data window represents one line of picture data, which in this example of this description is luminance data. Consistent with the signal shown in Figure 6B the luminance data in the data window of Figure 11 have been scrambled, such that a first part and a second part of the data have been interchanged.

The signals SR1 and SR2 represent cut-point control signals, and are the values in the two stages of cut-point registers, SR 121(i) and SR 122(i). Because these are 1-bit registers in this embodiment, the value stored in these registers is 1 or 0, with this value being referred to herein as control bit, Cl.

Referring now to Figure 10 step 101 occurs at the beginning of a line. The INIT signal causes the loading of accumulator 115c with the appropriate cut-point beginning sample number, which is 97 for luminance signals, plus the cut-point differential value, which is weighted to reflect the cut-point increments. Using the example where the cut-point differential value is 06, because the luminance cut-point is possible every other sample, accumulator 115c is loaded with 97 + (6 x 2) = 109.

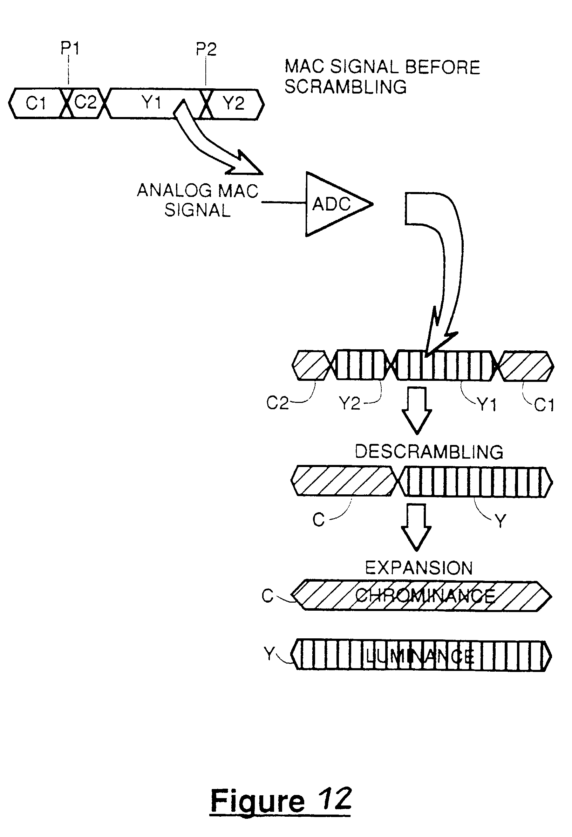

Referring now to Figure 12 as well as Figure 11, step 102 occurs during the WE data window for line n-1. Accumulator 115c is decremented, and Cl = 0 as accumulator 115c is decremented for all SWCK pulses except when the value in accumulator 115c is 0.

In step 103, when accumulator 115c reaches 0, Cl = 1 is loaded. Thus, at the end of the line, all SR's 121(i) contain 0 except SR 121(109).

At the beginning of the next line, line n, a new value of Pl is loaded into accumulator 115c. During the luminance data window for this line, the process is repeated to decrement accumulator 115c.

Also, after the INIT signal associated with line n, the RSTWH signal transfers the values of SR's 121(i) into SR's 122(i), so that all values of the second stage are 0 except SR 122(109). Because of the control logic of the WE signal, the first data sample of line n is loaded into DIR 11b(109), and at the same time, the 1 value in SR 122(109) is shifted one position to the right to SR 122(110).

This loading and shifting continues until the 1 control bit appears in the last SR 122(i). At this time, the next position for data input is DIR 11b(1), which is where the first data sample of line n should be. The control bit shifts to SR 122(1) and loading of the second part of line n begins at DIR 11b(1). The loading continues for DIR 11b(2) through DIR 11b(108), and ends at DIR 11b(108). The two parts of the luminance data window, which contains the data for line n, are now loaded in DIR 11b in the correct sequence.

A similar process is used to generate Cc, the color difference cut-point and to read the chrominance sample data into DIR 11a in the right order. Accumulator 115(C)c is loaded with the sum of the cut-point beginning sample number, 51, and the cut-point differential value.

### Combined Signal Expansion and Descrambling System

As indicated by Figure 12, the same television receiving system may be used for component signal expansion and descrambling. The descrambling is performed first, using descrambling unit 60. Then, the descrambled data is delivered to processing system 50a and loaded so as to achieve the time-expansion described above. Input circuits 54a and 54b would combine the logic and timing of control circuits of Figure 12 so that the signal is loaded in the correct sequence as well as time-expanded.

### Other Embodiments

Although the invention has been described with reference to specific embodiments, this description is not meant to be construed in a limiting sense. Various modifications of the disclosed embodiments, as well as alternative embodiments of the invention will be apparent to persons skilled in the art. It is, therefore, contemplated that the appended claims will cover all modifications that fall within the scope of the invention.

## Claims

1. A descrambling apparatus for descrambling a digital television signal having raster scan lines of plural bits of digital data in at least a luminance component and a chrominance component, said digital television signal being scrambled by interchanging parts of at least one of the luminance component and the chrominance component of each raster scan line of the digital television signal, said parts being interchanged at a corresponding cut-point, characterized in that it comprises :
a data input register (11) having a matrix of memory cells disposed in plural rows and plural columns, said plural columns equal in number to the number of pixels in a raster scan line, said data input register having an input port for receiving a number of bits equal to said plurality of rows for simultaneously storing a plurality of received bits in a selected column, said data input register having an output port for recalling from a selected row data stored in each of said columns;
an input control unit (54b) receiving information regarding said cut-point and connected to said data input register, said input control unit for a first received pixel selecting a column of said data input register corresponding to said cut-point, for subsequently received pixels selecting sequential columns of said data input register until a last column is selected, for a next received pixel selecting a first column of said data input register, and for subsequently received pixels selecting sequential columns until a last pixel of the raster scanned line is received;
a single-instruction multiple-data processor (14) having a number of processing elements (14ᵢ Figure 2) equal to a number of pixels in each raster scan line of the digital television signal;
a first data transfer control unit (R0 Addr, upper Rd/Wt circuitry Figure 2) connected to said data input register and said single-instruction multiple-data processor, said input control unit selecting said row accessed by said output port of said data input register for transfer of data stored in each column of said selected row to a corresponding one of said processing elements;
a data output register (16) having a matrix of memory cells disposed in plural rows and plural columns, said plural columns equal in number to the number of pixels in a raster scan line, said data output register having an input port for receiving and storing in a selected row data in each of said columns, said data output register having an output port for simultaneously outputting a number of bits equal to said plurality of rows from a selected column; and
a second data transfer control unit (R1 Addr, lower Rd/Wt circuitry Figure 2) connected to said single-instruction multiple-data processor and said data input register, said second data transfer control unit selecting said row accessed by said input port of said data output register for transfer of data from a corresponding one of said processing elements to in each column of said selected row.

2. The apparatus descrambling of claim 1, wherein said input control unit comprises:
a first shift register (SR 121) having a plurality of linearly connected first shift register stages (SR 121ᵢ) equal in number to the number of columns of said data input register, said first shift register initially cleared, then receiving a 1 input at a first shift register stage (SR 121₁), and shifting once each pixel period via a clock;
a set of first gates (123ᵢ), each having a first input connected to a corresponding first shift register stage, a second input receiving a control signal at a predetermined time corresponding to said cut-point, and an output;
a second shift register (SR 122) having a plurality of circularly connected shift register stages (SR 122ᵢ), each second shift register stage initially loaded from said first shift register via a corresponding first gate and shifting once each pixel period via said clock; and
a set of second gates (124ᵢ), each having a first input connected to a corresponding second shift register stage, a second input receiving a write enable signal once each pixel period, and an output connected to a write enable input of a corresponding column of said data input register.

3. A method for descrambling a digital television signal having raster scan lines of plural bits of digital data including at least a luminance component and a chrominance component, said digital television signal scrambled by interchanging parts of at least one of the luminance component and the chrominance component of each raster scan line of the digital television signal, said parts being interchanged at a corresponding cut-point, the method comprising:
storing a component having interchanged parts in a data input register having a matrix of memory cells disposed in plural rows and plural columns, said plural columns equal in number to a number of pixels in a raster scan line, by
storing plural bits of digital data of a component having interchanged parts for a first received pixel in corresponding row memory cells of a column of said data input register corresponding to said cut-point,
storing plural bits of digital data of a component having interchanged parts for subsequently received pixels in corresponding row memory cells of sequentially columns of said data input register until digital data is stored in a last column of said data input register,
storing plural bits of digital data of a component having interchanged parts for a next received pixel in corresponding row memory cells of a first column of said data input register, and
storing plural bits of digital data of a component having interchanged parts for subsequently received pixels in corresponding row memory cells of sequentially columns of said data input register until a last pixel of the raster scanned lie is received;
recalling data from said data input register by recalling data from a memory cell of a corresponding row in each of the plural columns;
supplying data recalled from each column of said data input register to a corresponding single bit processing element for processing;
storing a single bit of processed data from each processing elements in a corresponding column of a selected row of a data output register; and
outputting data from all columns of a selected row of said data output register.

## Patentansprüche

1. Entwürfelungsvorrichtung zum Entwürfeln eines digitalen Fernsehsignals, das Rasterabtastzeilen aus mehreren Bits digitaler Daten besitzt, in wenigstens eine Luminanzkomponente und wenigstens eine Chrominanzkomponente, wobei das digitale Fernsehsignal durch Vertauschen von Teilen der Luminanzkomponente und/oder der Chrominanzkomponente jeder Rasterabtastzeile des digitalen Fernsehsignals verwürfelt wird, wobei die Teile an einen entsprechenden Schnittpunkt vertauscht werden,
dadurch gekennzeichnet, daß sie enthält:
ein Dateneingangsregister (11) mit einer Matrix aus Speicherzellen, die in mehreren Zeilen und mehreren Spalten angeordnet sind, wobei die Anzahl der mehreren Spalten gleich der Anzahl der Pixel in einer Rasterabtastzeile ist, wobei das Dateneingangsregister einen Eingangsanschluß für den Empfang einer Anzahl von Bits, die gleich den mehreren Zeilen ist, besitzt, um gleichzeitig mehrere empfangene Bits in einer gewählten Spalte zu speichern, wobei das Dateneingangsregister einen Ausgangsanschluß zum Wiederaufrufen von in jeder der Spalten gespeicherten Daten aus einer gewählten Zeile;
eine Eingangssteuereinheit (54b), die Informationen bezüglich des Schnittpunkts empfängt und an das Dateneingangsregister angeschlossen ist, wobei die Eingangssteuereinheit für ein erstes empfangenes Pixel eine dem Schnittpunkt entsprechende Spalte des Dateneingangsregisters wählt, für anschließend empfangene Pixel aufeinanderfolgende Spalten des Dateneingangsregisters wählt, bis eine letzte Spalte gewählt wird, für ein nächstes empfangenes Pixel eine erste Spalte des Dateneingangsregisters wählt und für anschließend empfangene Pixel aufeinanderfolgende Spalten wählt, bis ein letztes Pixel der Rasterabtastzeile empfangen wird;
einen Einzelbefehl-Mehrfachdaten-Prozessor (14) mit einer Anzahl von Verarbeitungselementen (14, Figur 2), die gleich der Anzahl der Pixel in jeder Rasterabtastzeile des digitalen Fernsehsignals ist;
eine erste Datenübertragung-Steuereinheit (R0 Addr, obere Rd/Wt-Schaltungsanordnung, Fig. 2), die an das Dateneingangsregister und an den Einzelbefehl-Mehrfachdaten-Prozessor angeschlossen ist, wobei die Eingangssteuereinheit die Zeile wählt, auf die durch den Ausgangsanschluß des Dateneingangsregisters zugegriffen wird, um in jeder Spalte der gewählten Zeile gespeicherte Daten an ein entsprechendes der Verarbeitungselemente zu übertragen;
ein Datenausgangsregister (16), das eine Matrix aus Speicherzellen besitzt, die in mehreren Zeilen und mehreren Spalten angeordnet sind, wobei die Anzahl der mehreren Spalten gleich der Anzahl der Pixel in einer Rasterabtastzeile ist, wobei das Datenausgangsregister einen Eingangsanschluß zum Empfangen und Speichern von Daten in jeder der Spalten in einer gewählten Zeile besitzt, wobei das Datenausgangsregister einen Ausgangsanschluß besitzt, über den aus einer gewählten Spalte gleichzeitig eine Anzahl von Bits, die gleich der Anzahl der mehreren Zeilen ist, ausgegeben wird; und
einer zweiten Datenübertragung-Steuereinheit (R1 Addr, untere Rd/Wt-Schaltungsanordnung, Fig. 2), die an den Einzelbefehl-Mehrfachdaten-Prozessor und an das Dateneingangsregister angeschlossen ist, wobei die zweite Datenübertragung-Steuereinheit die Zeile wählt, auf die durch den Eingangsanschluß des Datenausgangsregisters zugegriffen wird, um Daten von einem entsprechenden der Verarbeitungselemente an jede Spalte der gewählten Zeile zu übertragen.

2. Enwürfelungsvorrichtung nach Anspruch 1, wobei die Eingangssteuereinheit enthält:
ein erstes Schieberegister (SR 121), das mehrere seriell geschaltete erste Schieberegisterstufen (SR 121ᵢ) besitzt, deren Anzahl gleich der Anzahl von Spalten im Dateneingangsregister ist, wobei das erste Schieberegister anfangs gelöscht wird und dann an einer ersten Schieberegisterstufe (SR 121₁) einen 1-Eingang empfängt und in jeder Pixelperiode über einen Takt eine einmalige Verschiebung ausführt;
einen Satz erster Gatter (123ᵢ), wovon jedes einen ersten Eingang, der an eine entsprechende erste Schieberegisterstufe angeschlossen ist, einen zweiten Eingang, der zu einem dem Schnittpunkt entsprechenden vorgegebenen Zeitpunkt ein Steuersignal empfängt, sowie einen Ausgang enthält;
eine zweites Schieberegister (SR 122) mit mehreren zirkulär verbundenen Schieberegisterstufen (SR 122ᵢ), wobei jede zweite Registerstufe anfangs vom ersten Schieberegister über ein entsprechendes erstes Gatter geladen wird und in jeder Pixelperiode über einen Takt einen einmaligen Verschiebungsvorgang ausführt; und
einen Satz zweiter Gatter (124ᵢ), wovon jedes einen ersten Eingang, der an eine entsprechende zweite Schieberegisterstufe angeschlossen ist, einen zweiten Eingang, der einmal in jeder Pixelperiode ein Schreibfreigabesignal empfängt, und einen Ausgang, der an einen Schreibfreigabeeingang einer entsprechenden Spalte des Dateneingangsregisters angeschlossen ist, enthält.

3. Verfahren zum Entwürfeln eines digitalen Fernsehsignals, das Rasterabtastzeilen aus mehreren Bits digitaler Daten besitzt und wenigstens eine Luminanzkomponente und eine Chrominanzkomponente enthält, wobei das digitale Fernsehsignal durch Vertauschen von Teilen der Luminanzkomponente und/oder der Chrominanzkomponente jeder Rasterabtastzeile des digitalen Fernsehsignals verwürfelt wird, wobei die Teile an einem entsprechenden Schnittpunkt vertauscht werden, wobei das Verfahren enthält:
Speichern einer Komponente mit vertauschten Teilen in einem Dateneingangsregister, das eine Matrix aus Speicherzellen besitzt, die in mehreren Zeilen und mehreren Spalten angeordnet sind, wobei die Anzahl der mehreren Spalten gleich der Anzahl von Pixel in einer Rasterabtastzeile ist, indem
mehrere Bits digitaler Daten einer Komponente mit vertauschten Teilen für ein erstes empfangenes Pixel in entsprechenden Zeilenspeicherzellen einer Spalte des Dateneingangsregisters, die dem Schnittpunkt entspricht, gespeichert werden,
mehrere Bits digitaler Daten einer Komponente mit vertauschten Teilen für anschließend empfangene Pixel in entsprechenden Zeilenspeicherzellen aufeinanderfolgender Spalten des Dateneingangsregisters gespeichert werden, bis digitale Daten in einer letzten Spalte des Dateneingangsregisters gespeichert werden,
mehrere Bits digitaler Daten einer Komponente mit vertauschten Teilen für ein nächstes empfangenes Pixel in entsprechenden Zeilenspeicherzellen einer ersten Spalte des Dateneingangsregisters gespeichert werden und
mehrere Bits digitaler Daten einer komponente mit vertauschten Teilen für anschließend empfangene Pixel in entsprechenden Zeilenspeicherzellen aufeinanderfolgender Spalten des Dateneingangsregisters gespeichert werden, bis ein letztes Pixel der Rasterabtastzeile empfangen wird;
Wiederaufrufen von Daten aus dem Dateneingangsregister durch Wiederaufrufen von Daten aus einer Speicherzelle einer entsprechenden Zeile in jeder der mehreren Spalten;
Liefern von aus jeder Spalte des Dateneingangsregisters wiederaufgerufenen Daten an ein entsprechendes Einzelbit-Verarbeitungselement für deren Verarbeitung;
Speichern eines einzelnen Bits verarbeiteter Daten aus jedem Verarbeitungselement in einer entsprechenden Spalte einer gewählten Zeile eines Datenausgangsregisters; und
Ausgeben von Daten aus sämtlichen Spalten einer gewählten Zeile des Datenausgangsregisters.

## Revendications

1. Appareil de décryptage pour décrypter un signal numérique de télévision comportant des lignes de balayage de trame de plusieurs bits de données numériques en au moins une composante de luminance et une composante de chrominance, ledit signal numérique de télévision étant crypté par échange de parties d'au moins l'une de la composante de luminance et de la composante de chrominance de chaque ligne de balayage de trame du signal numérique de télévision, lesdites parties étant échangées en un point de blocage correspondant, caractérisé en ce qu'il comprend :
un registre (11) d'entrée de données comportant une matrice de cellules de mémoire disposées en plusieurs rangées et plusieurs colonnes, le nombre desdites plusieurs colonnes étant égal au nombre de pixels dans une ligne de balayage de trame, ledit registre d'entrée de données comportant un accès d'entrée pour recevoir un nombre de bits égal à ladite pluralité de rangées pour stocker simultanément une pluralité de bits reçus dans une colonne sélectionnée, ledit registre d'entrée de données comportant un accès de sortie pour rappeler, à partir d'une rangée sélectionnée, des données stockées dans chacune desdites colonnes ;
une unité (54b) de commande d'entrée recevant une information concernant ledit point de blocage et connectée audit registre d'entrée de données, ladite unité de commande d'entrée, pour un premier pixel reçu, sélectionnant une colonne dudit registre d'entrée de données correspondant audit point de blocage, pour les pixels reçus ensuite, sélectionnant des colonnes séquentielles dudit registre d'entrée de données jusqu'à ce que la dernière colonne soit sélectionnée, pour un pixel reçu ensuite, sélectionnant une première colonne dudit registre d'entrée de données, et pour les pixels reçus ensuite, sélectionnant des colonnes séquentielles jusqu'à ce qu'un dernier pixel de la ligne de balayage de trame soit reçu ;
un processeur (14) de données multiples à une seule instruction comportant un nombre d'éléments de traitement (14ᵢ, figure 2) égal au nombre de pixels dans chaque ligne de balayage de trame du signal numérique de télévision ;
une première unité (RO Addr, circuit Rd/Wt supérieur sur la figure 2) de commande de transfert de données connectée audit registre d'entrée de données et audit processeur de données multiples à une seule instruction, ladite unité de commande d'entrée sélectionnant ladite rangée à laquelle on a accédé par ledit accès de sortie dudit registre d'entrée de données pour un transfert de données stockées dans chaque colonne de ladite rangée sélectionnée vers un élément correspondant desdits éléments de traitement ;
un registre (16) de sortie de données comportant une matrice de cellules de mémoire disposées en plusieurs rangées et plusieurs colonnes, le nombre desdites plusieurs colonnes étant égal au nombre de pixels dans une ligne de balayage de trame, ledit registre de sortie de données comportant un accès d'entrée pour recevoir et stocker dans une rangée sélectionnée des données dans chacune desdites colonnes, ledit registre de sortie de données comportant un accès de sortie pour délivrer simultanément un nombre de bits égal à ladite pluralité de rangées à partir d'une colonne sélectionnée ; et
une deuxième unité (R1 Addr, circuit Rd/Wt inférieur sur la figure 2) de commande de transfert de données connectée audit processeur de données multiples à une seule instruction et audit registre d'entrée de données, ladite deuxième unité de commande de transfert de données sélectionnant ladite rangée à laquelle on a accédé par ledit accès d'entrée dudit registre de sortie de données pour un transfert de données entre un élément correspondant desdits éléments de traitement et chaque colonne de ladite rangée sélectionnée,

2. Appareil de décryptage selon la revendication 1, dans lequel ladite unité de commande d'entrée comprend :
un premier registre à décalage (SR 121) comportant une pluralité d'étages (SR 121ᵢ) de premier registre à décalage, connectés de manière linéaire, dont le nombre est égal au nombre de colonnes dudit registre d'entrée de données, ledit premier registre à décalage étant remis à zéro initialement, puis recevant une entrée 1 au niveau d'un étage (SR 121ᵢ) du registre à décalage, et décalant une fois chaque période de pixel par l'intermédiaire d'une horloge ;
une série de premières portes (123ᵢ), ayant chacune une première entrée connectée à un étage correspondant du premier registre à décalage, une deuxième entrée recevant un signal de commande à un instant prédéterminé correspondant audit point de blocage, et une sortie ;
un deuxième registre à décalage (SR 122) comportant une pluralité d'étages (SR 122ᵢ) de registre à décalage, connectés de manière circulaire, chaque étage du deuxième registre à décalage étant chargé initialement à partir dudit premier registre à décalage par l'intermédiaire d'une première porte correspondante et décalant une fois chaque période de pixel par l'intermédiaire de ladite horloge ; et
une série de deuxièmes portes (124ᵢ), ayant chacune une première entrée connectée à un étage correspondant du deuxième registre à décalage, une deuxième entrée recevant un signal de validation d'écriture une fois à chaque période de pixel, et une sortie connectée à une entrée de validation d'écriture d'une colonne correspondante dudit registre d'entrée de données.

3. Procédé pour décrypter un signal numérique de télévision comportant des lignes de balayage de trame de plusieurs bits de données numériques comportant au moins une composante de luminance et une composante de chrominance, ledit signal numérique de télévision étant décrypté par échange de parties d'au moins l'une de la composante de luminance et de la composante de chrominance de chaque ligne de balayage de trame du signal numérique de télévision, lesdites parties étant échangées en un point de blocage correspondant, le procédé comprenant :
le stockage d'une composante comportant des parties échangées dans un registre d'entrée de données comportant une matrice de cellules disposées en plusieurs rangées et plusieurs colonnes, le nombre desdites plusieurs colonnes étant égal à un nombre de pixels dans une ligne de balayage de trame, par
stockage de plusieurs bits de données numériques d'une composante comportant des parties échangées pour un premier pixel reçu, dans des cellules de mémoire de rangée correspondante d'une colonne dudit registre d'entrée de données correspondant audit point de blocage,
stockage de plusieurs bits de données numériques d'une composante comportant des parties échangées pour les pixels reçus ensuite, dans des cellules de mémoire de rangée correspondante de colonnes séquentielles dudit registre d'entrée de données, jusqu'à ce que les données numériques soient stockées dans la dernière colonne dudit registre d'entrée de données,
stockage de plusieurs bits de données numériques d'une composante comportant des parties échangées pour le pixel reçu ensuite, dans des cellules de mémoire de rangée correspondante d'une première colonne dudit registre d'entrée de données, et
stockage de plusieurs bits de données numériques d'une composante comportant des parties échangées pour les pixels reçus ensuite, dans des cellules de mémoire de rangée correspondante de colonnes séquentielles dudit registre d'entrée de données, jusqu'à ce que le dernier pixel de la ligne de balayage de trame soit reçu ;
rappel de données à partir dudit registre d'entrée de données par rappel de données à partir d'une cellule de mémoire d'une rangée correspondante dans chacune de la pluralité de colonnes ;
application de données rappelées à partir de chaque colonne dudit registre d'entrée de données, à un élément correspondant de traitement à un seul bit, pour un traitement ;
stockage d'un seul bit de données traitées en provenance de chaque élément de traitement, dans une colonne correspondante d'une rangée sélectionnée d'un registre de sortie de données ; et
délivrance de données à partir de toutes les colonnes d'une rangée sélectionnée dudit registre de sortie de données.
